(19) **Europäisches Patentamt / European Patent Office / Office européen des brevets**

(11) **EP 4 068 119 A1**

(12) **EUROPEAN PATENT APPLICATION**
published in accordance with Art. 153(4) EPC

(43) Date of publication:
**05.10.2022 Bulletin 2022/40**

(21) Application number: **20893142.8**

(22) Date of filing: **09.11.2020**

(51) International Patent Classification (IPC):
**G06F 16/9535** (2019.01)

(52) Cooperative Patent Classification (CPC):
**G06F 16/435; G06F 16/9535; G06F 16/9536**

(86) International application number:
**PCT/CN2020/127541**

(87) International publication number:
**WO 2021/103994 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.11.2019 CN 201911173202**

(71) Applicant: **Beijing Dajia Internet Information Technology Co., Ltd.**
**Beijing 100085 (CN)**

(72) Inventors:
• **LU, Haitao**
  **Beijing 100085 (CN)**
• **TIAN, Xiaoyu**
  **Beijing 100085 (CN)**
• **BAI, Ming**
  **Beijing 100085 (CN)**

(74) Representative: **Mathys & Squire**
**Theatinerstraße 7**
**80333 München (DE)**

(54) **MODEL TRAINING METHOD AND APPARATUS FOR INFORMATION RECOMMENDATION, ELECTRONIC DEVICE AND MEDIUM**

(57)     A model training method and apparatus for information recommendation, an electronic device and a medium, which relate to the technical field of computers. The method at least comprises: inputting a pre-determined training sample set into a first recommendation model to obtain an estimated recommendation result of the first recommendation model with respect to work information (101), wherein the training sample set at least comprises proximity information of multimedia sample work, the proximity information containing location information of current recommended multimedia sample work in a current recommended page; and on the basis of the estimated recommendation result and the pre-determined training sample set, generating a training sample set of a second recommendation model to train the second recommendation model to obtain an online recommendation model (102), wherein the online recommendation model is used to generate recommended parameters for works in a multimedia work library corresponding to a user once a recommendation request of a user is received. As such, the recommendation model can be enabled to more accurately recommend multimedia works to users.

Obtain an estimated recommendation result for work information from a first recommendation model by inputting a training sample set which is pre-determined into the first recommendation model — 101

Generate, based on the estimated recommendation result and the training sample set which is pre-determined, a training sample set for a second recommendation model to train the second recommendation model; and obtain an online recommendation model by training the second recommendation model — 102

Fig. 1

## Description

### Cross reference to related applications

The present application claims priority to Chinese Patent Application No. CN 201911173202.5 filed on November 26, 2019, entitled "METHOD, APPARATUS, ELECTRONIC DEVICE AND MEDIUM FOR TRAINING AN INFORMATION RECOMMENDATION MODEL", the entire contents of which are incorporated herein by reference.

### Field

The present disclosure relates to the technical field of online information interaction, in particular to a method, apparatus, electronic device and medium for training an information recommendation model.

### Background

Currently, many online apps recommend multimedia works to users. For example, a video application website will rely on a user's operation history information on video clicking and recommend to the user multimedia works of the same category as or of a category related to videos watched by the user. For example, the user frequently watches automobile-related videos, and videos or advertisement information related to automobiles may be recommended to the user by an electronic device.

Currently, the electronic device may train a recommendation model according to operation information of the user, and then, according to the operation information of the user as well as the trained recommendation model, recommend to the user multimedia works, such as videos, advertisements, commodities, etc.

The inventor found that a recommendation model trained in the related art only relies on operation of a user to determine whether to recommend a certain type of multimedia works, and when the recommendation model is trained, training is performed merely based on the user's historical operation information on clicking the particular type of multimedia works. The operation information obtained by the electronic device includes location and time of operation and page type, but such information is inadequate to reflecting the user's preference, so a recommendation result of the recommendation model trained according to the information is not accurate enough.

### Summary

Embodiments of the present disclosure aim to provide a method, apparatus, electronic device and medium for training an information recommendation model so as to enable a recommendation model to more accurately recommend multimedia works to a user. A specific technical solution is as follows.

According to a first aspect of an embodiment of the present disclosure, a method for training an information recommendation model is provided. The method is applied to an electronic device and includes: obtaining an estimated recommendation result for work information from a first recommendation model by inputting a training sample set which is pre-determined into the first recommendation model, wherein the training sample set at least includes proximity information of a multimedia sample work, and the proximity information of the multimedia sample work at least includes location information of a current recommended multimedia sample work on a current recommended page; generating, based on the estimated recommendation result and the training sample set which is pre-determined, a training sample set for a second recommendation model to train the second recommendation model; and obtaining an online recommendation model by training the second recommendation model, wherein the online recommendation model is configured to generate recommended parameters for works in a multimedia work library corresponding to a user in response to a recommendation request received from the user.

According to a second aspect of an embodiment of the present disclosure, an apparatus for training an information recommendation model is provided. The apparatus is applied to an electronic device and includes: an inputting unit, configured to obtain an estimated recommendation result for work information from a first recommendation model by inputting a training sample set which is pre-determined into the first recommendation model, wherein the training sample set at least includes proximity information of a multimedia sample work, and the proximity information of the multimedia sample work at least includes location information of a current recommended multimedia sample work on a current recommended page; and a training unit, configured to generate, based on the estimated recommendation result and the training sample set which is pre-determined, a training sample set for a second recommendation model to train the second recommendation model, and obtain an online recommendation model by training the second recommendation model, wherein the online recommendation model is configured to generate recommended parameters for works in a multimedia work library corresponding to a user in response to a recommendation request received from the user.

According to a third aspect of an embodiment of the present disclosure, an electronic device is provided and includes a processor, a communication interface, a memory and a communication bus. The processor, the communication interface and the memory complete communication among them through the communication bus.

The memory is configured to store a computer program.

The processor is configured to call the computer program stored on the memory to cause the electronic device to: obtain an estimated recommendation result for work information from a first recommendation model by inputting a training sample set which is pre-determined into the first recommendation model, wherein the training sample set at least includes proximity information of a multimedia sample work, and the proximity information of the multimedia sample work at least includes location information of a current recommended multimedia sample work on a current recommended page; generate, based on the estimated recommendation result and the training sample set which is pre-determined, a training sample set for a second recommendation model to train the second recommendation model; and obtain an online recommendation model by training the second recommendation model, wherein the online recommendation model is configured to generate recommended parameters for works in a multimedia work library corresponding to a user in response to a recommendation request received from the user.

According to a fourth aspect of an embodiment of the present disclosure, a computer readable storage medium is provided. The computer readable storage medium stores a computer program, and the computer program is executed by a processor of a computer to cause the computer to execute the method according to the above first aspect.

The embodiments of the present disclosure provide the method and apparatus for training the information recommendation model. The electronic device may input the pre-determined training sample set into the first recommendation model to obtain the estimated recommendation result for the work information from the first recommendation model, and generate the training sample set for the second recommendation model based on the estimated recommendation result and the pre-determined training sample set to train the second recommendation model so as to obtain the online recommendation model. In this way, the electronic device can influence the second recommendation model through the estimated recommendation result carrying the proximity information when the second recommendation model is trained, so that the trained second recommendation model can more accurately recommend multimedia works to the user.

Of course, implementing any product or method of the present disclosure does not necessarily require achieving all of the advantages described above simultaneously.

**Brief Description of the Drawings**

In order to more clearly describe technical solutions in embodiments of the present disclosure or in the related art, drawings that need to be used in the description of the embodiments or the related art will be briefly introduced below. Apparently, the drawings in the following description are only some embodiments of the present disclosure. For those of ordinary skill in the art, other drawings can be obtained based on these drawings without creative labor.

Fig. 1 is a flow chart of a method for training an information recommendation model provided by an embodiment of the present disclosure.
Fig. 2 is another flow chart of a method for training an information recommendation model provided by an embodiment of the present disclosure.
Fig. 3 is yet another flow chart of a method for training an information recommendation model provided by an embodiment of the present disclosure.
Fig. 4 is yet another flow chart of a method for training an information recommendation model provided by an embodiment of the present disclosure.
Fig. 5 is yet another flow chart of a method for training an information recommendation model provided by an embodiment of the present disclosure.
Fig. 6 is yet another flow chart of a method for training an information recommendation model provided by an embodiment of the present disclosure.
Fig. 7 is yet another flow chart of a method for training an information recommendation model provided by an embodiment of the present disclosure.
Fig. 8 is a schematic flow chart of a method for training an information recommendation model provided by an embodiment of the present disclosure.
Fig. 9 is a schematic structural diagram of an apparatus for training an information recommendation model provided by an embodiment of the present disclosure.
Fig, 10 is a schematic structural diagram of an electronic device provided by an embodiment of the present disclosure.

**Detailed Description of the Embodiments**

In order to make those of skill in the art better understand the technical solutions of the present disclosure, the technical solutions in the embodiments of the present disclosure will be described clearly and completely below with reference to the accompanying drawings.

It should be noted that the terms "first", "second" and the like in the description and claims of the present disclosure and in the above-mentioned drawings are used to distinguish similar objects, and are not necessarily used to describe a specific order or sequence. It should be understood that data used in this way is interchangeable under appropriate circumstances so that the embodiments of the present disclosure described herein can be practiced in sequences other than those illustrated or described herein. The implementations described in the following exemplary embodiments are not intended to represent all implementations consistent with this disclosure. Rather, they are merely examples of apparatus and methods consistent with some aspects of the present disclosure, as recited in the appended claims.

An embodiment of the present disclosure discloses a method for training an information recommendation model. The method is applied to an electronic device, such as a mobile terminal, a personal computer (PC) terminal, a server, etc. The electronic device may, according to an instruction input by a user, start an application program corresponding to the instruction. The application program may contain implementation programs of a first recommendation model and a second recommendation model.

The first recommendation model and the second recommendation model are algorithm models, the second recommendation model is configured to estimate online whether to recommend multimedia works, the first recommendation model is configured to perform training based on a training set under an offline state, and an output result from the second recommendation model may be used for an offline training process for the first recommendation model. When the electronic device inputs data related to a user behavior to the first recommendation model or the second recommendation model, the first recommendation model or the second recommendation model may output a recommendation result corresponding to the data related to the user behavior.

A multimedia work is an object in a certain application program in the electronic device. For example, the multimedia work may be a video in video software, a picture in social software, an article in reading software, or a product in shopping software.

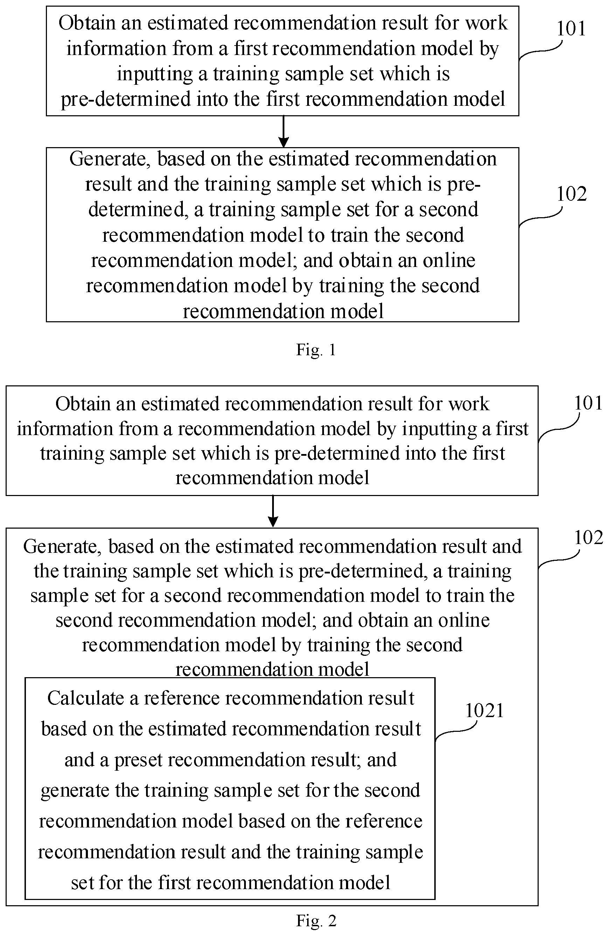

The method for training the information recommendation model provided by the embodiment of the present disclosure will be described in detail below in combination with specific implementations. As shown in Fig. 1, steps are as follows.

Step 101, a pre-determined training sample set is input into a first recommendation model to obtain an estimated recommendation result for work information from the first recommendation model.

The training sample set at least includes proximity information of a multimedia sample work, and the proximity information of the multimedia sample work at least includes location information of a current recommended multimedia sample work on a current recommended page.

The estimated recommendation result is used to represent a probability of a multimedia work to be recommended, usually represented by a numerical value within a range of 0 to 1, where 1 may represent that a recommendation probability is the largest and 0 may represent that the recommendation probability is the smallest. For example, if an estimated probability of the multimedia work is 0.9, an electronic device may recommend the multimedia work to a user, and if the estimated probability of the multimedia work is 0.1, the electronic device may not recommend the multimedia work to the user.

Sep 102, a training sample set for a second recommendation model is generated based on the estimated recommendation result and the training sample set which is pre-determined to train the second recommendation model, and an online recommendation model is obtained by training the second recommendation model.

The online recommendation model is configured to generate recommended parameters for works in a multimedia work library corresponding to a user in response to a recommendation request received from the user.

The embodiment of the present disclosure provides the method for training the information recommendation model. The electronic device may input the pre-determined training sample set into the first recommendation model to obtain the estimated recommendation result for the work information from the first recommendation model, and generate the training sample set for the second recommendation model based on the estimated recommendation result and the pre-determined training sample set to train the second recommendation model so as to obtain the online recommendation model. In this way, the electronic device may influence the second recommendation model through the estimated recommendation result carrying the proximity information when training the second recommendation model, so that the trained second recommendation model may more accurately recommend multimedia works to the user.

Optionally, in the embodiment of the present disclosure, the proximity information may refer to a sequence number of a current recommended video on a page. For example, if 20 quantities of videos are recommended to the user, the proximity information refers to sequence numbers of the 20 videos recommended to the user; and further, the proximity information may also include: IDs (Identities) of three videos before and IDs of two videos after the current recommended video.

In one possible implementation, as shown in Fig. 2, for the step of generating the training sample set for the second recommendation model based on the estimated recommendation result and the pre-determined training sample set in the above step 102, the electronic device may perform as follow.

Step 1021, a reference recommendation result is calculated based on the estimated recommendation result and a preset recommendation result, and the training sample set for the second recommendation model is generated based on the reference recommendation result and the training sample set for the first recommendation model.

The reference recommendation result may serve as a label of the training sample set for the second recommendation model. The reference recommendation result is obtained by calculating based on the estimated recommendation result and the preset recommendation result, and the estimated recommendation result is a recommendation result output by the first recommendation model at least based on the proximity information of the multimedia sample work. Therefore, when the electronic device trains the second recommendation model based on the training sample set for the second recommendation model, it may cause network parameters of the second recommendation model to be influenced by the proximity information, so that a recommendation result from the second recommendation model being trained is more accurate.

In one possible implementation, for the step of calculating the reference recommendation result based on the estimated recommendation result and the preset recommendation result in the above step 1021, the electronic device may perform as follow.

The reference recommendation result is calculated by adopting the following formula:

$$L = a \times yl + (1-a) \times yt.$$

Wherein L is the reference recommendation result, yl is the preset recommendation result, yt is the estimated recommendation result, a is a preset adjustment constant, and 0<a<1.

For example, for a certain work X, the estimated recommendation result yt is 0.3, the preset recommendation result yl is 0, the adjustment constant a is 0.25, and the reference recommendation result L of the work X is 0.225, which may be understood as the user's preference degree to the work X is 0.225 (1 represents that a preference degree is the highest and 0 represents that the preference degree is the lowest).

In practical application, the electronic device may determine whether to recommend corresponding works to the user based on a value of the recommendation result and a preset threshold.

For example, when the second recommendation model is used online, if a recommendation result output thereby for a work A is 0.75 and the preset threshold is 0.5, the electronic device may recommend the work A corresponding to the recommendation result.

In the embodiment of the present disclosure, the electronic device may combine the estimated recommendation result and the preset recommendation result into the reference recommendation result based on the formula provided by the embodiment of the present disclosure. Because the preset recommendation result is an accurate recommendation result and the estimated recommendation result is a recommendation result obtained at least based on the proximity information, the reference recommendation result may serve as a more accurate training label of the second recommendation model.

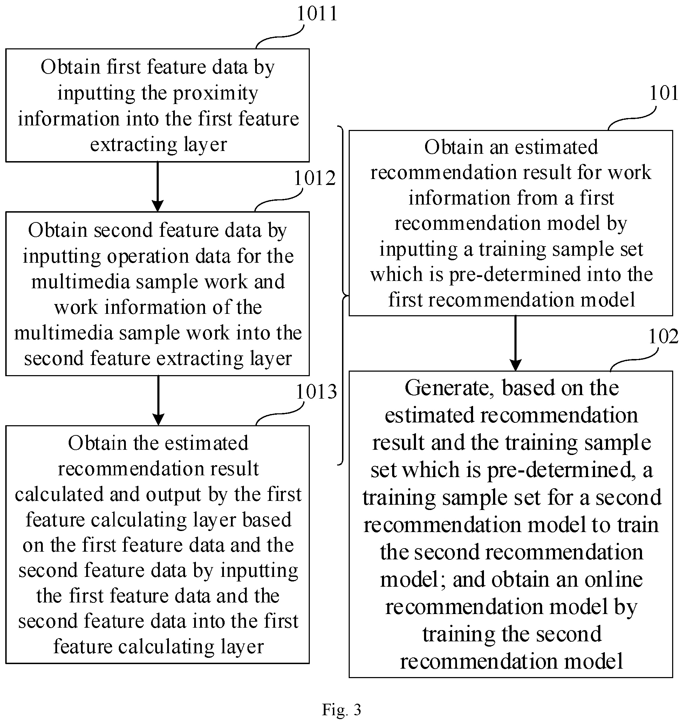

In one possible implementation, as shown in Fig. 3, for the above step 101 of inputting the pre-determined training sample set into the first recommendation model to obtain the estimated recommendation result for the work information from the first recommendation model, the electronic device may perform the following steps.

Step 1011, the proximity information is input into a first feature extracting layer of the first recommendation model to obtain first feature data.

The first recommendation model includes the first feature extracting layer and a first feature calculating layer.

The first feature extracting layer is configured to extract a feature vector of the proximity information, and the first feature calculating layer is configured to calculate feature data corresponding to the feature vector.

Step 1012, operation data for the multimedia sample work and work information of the multimedia sample work is input into a second feature extracting layer of the second recommendation model to obtain second feature data.

The second recommendation model includes the second feature extracting layer and a second feature calculating layer, and the pre-determined training sample set further includes operation data of the user for the multimedia sample work.

The second feature extracting layer is configured to extract the operation data for the multimedia sample work and a feature vector of the work information of the multimedia sample work, and the second feature calculating layer is configured to calculate feature data corresponding to the feature vector.

Step 1013, the first feature data and the second feature data are input into the first feature calculating layer of the first recommendation model to obtain the estimated recommendation result calculated and output by the first feature calculating layer based on the first feature data and the second feature data.

In the embodiment of the present disclosure, the estimated recommendation result is a recommendation result obtained by simultaneously calculating based on the operation data of the user on the multimedia sample work and the proximity information of the multimedia sample work by the first feature calculating layer, and the estimated recommendation result is influenced by the proximity information, so the estimated recommendation result may more accurately reflect a recommendation result corresponding to the user.

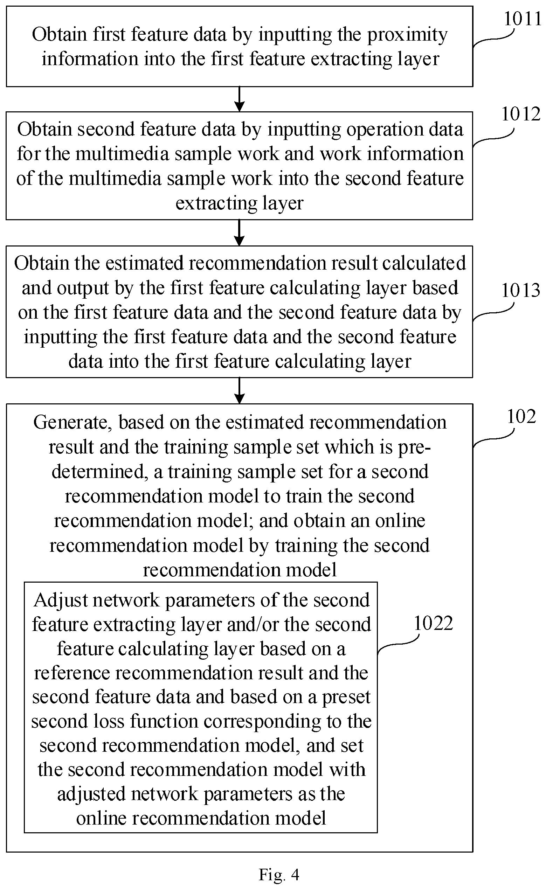

In one possible implementation, as shown in Fig. 4, in combination with content shown in Fig. 3, in the above step 102 of generating the training sample set for the second recommendation model based on the estimated recommendation result and the pre-determined training sample set to train the second recommendation model to obtain the online recommendation model, the electronic device may further perform as follow.

Step 1022, network parameters of the second feature extracting layer and/or the second feature calculating layer of the second recommendation model are adjusted based on the reference recommendation result and the second feature data and based on a preset second loss function corresponding to the second recommendation model, and the second recommendation model with adjusted network parameters is set as the online recommendation model.

After the electronic device adjusts the network parameters of the second feature calculating layer, it may cause the network parameters of the second feature calculating layer to be influenced by the proximity information, so the recommendation result corresponding to the multimedia work is more accurate.

Therefore, in practical application, after the electronic device obtains the reference recommendation result and the second feature data, it may only adjust network parameters of the second feature extracting layer of the second recommendation model, or may also only adjust network parameters of the second feature calculating layer of the second recommendation model, or may also adjust the network parameters of the second feature extracting layer and the second feature calculating layer at the same time.

After the electronic device trains the second recommendation model, it may deploy the trained second recommendation model online and use it to recommend multimedia works to the user.

In practical application, the electronic device may determine whether to recommend multimedia works corresponding to the recommendation result to the user based on a value of the recommendation result output by the trained second recommendation model and a preset threshold.

For example, when the second recommendation model is used online, if the recommendation result output thereby for a multimedia work A is 0.75 and the preset threshold is 0.5, the electronic device may recommend the multimedia work A to the user.

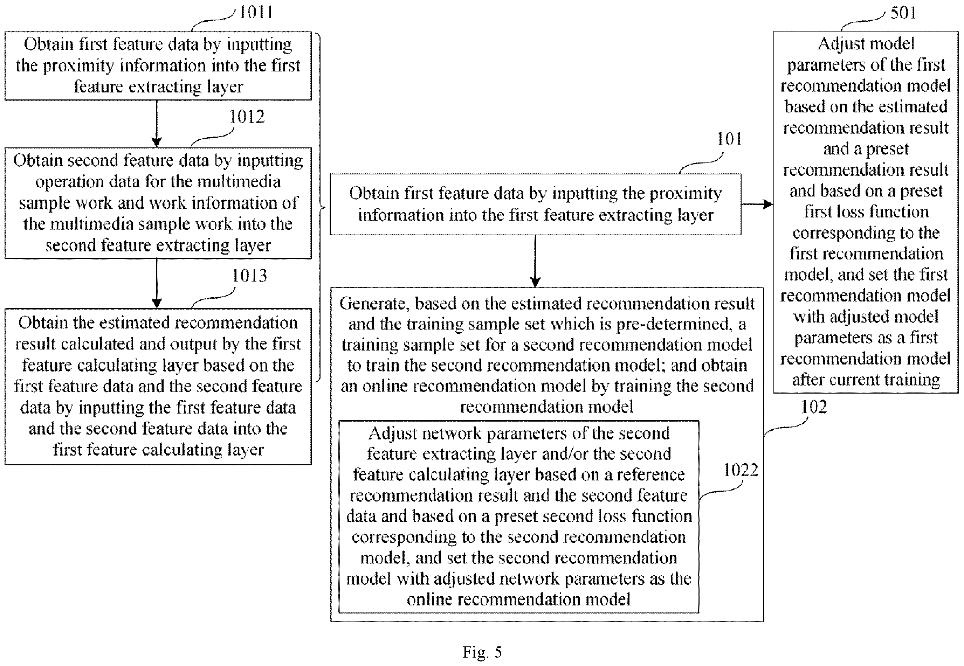

In one possible implementation, as shown in Fig. 5, in combination with content shown in Fig. 3 or Fig. 4, after the step 101 of inputting the pre-determined training sample set into the first recommendation model to obtain the estimated recommendation result for the work information from the first recommendation model, the electronic device may further perform as below.

Step 501, model parameters of the first recommendation model are adjusted based on the estimated recommendation result and a preset recommendation result and based on a preset first loss function corresponding to the first recommendation model, and the first recommendation model with adjusted model parameters is set as a first recommendation model after current training.

In one possible implementation, the electronic device may adjust the model parameters of the first recommendation model based on a cross-entropy function (the first loss function).

The electronic device may also use other available functions in the related art as the first loss function, and repeated description will not be made by the embodiment of the present disclosure.

Because the first recommendation model is configured to output the estimated recommendation result and the estimated recommendation result is configured to train the second recommendation model, after the second recommendation model adjusts the model parameters of the first recommendation model, the estimated recommendation result may be more accurate.

Therefore, the trained second recommendation model may output a more accurate recommendation result.

In one possible implementation, for the above step 501 of adjusting the model parameters of the first recommendation model based on the estimated recommendation result and the preset recommendation result and based on to the preset first loss function corresponding to the first recommendation model, and setting the first recommendation model after parameter adjustment as the first recommendation model after current training, the electronic device may perform as follow.

Network parameters of the first feature extracting layer and/or the first feature calculating layer are adjusted based on the estimated recommendation result and the preset recommendation result and based on the preset first loss function corresponding to the first recommendation model, and the first recommendation model after parameter adjustment is set as the first recommendation model after current training.

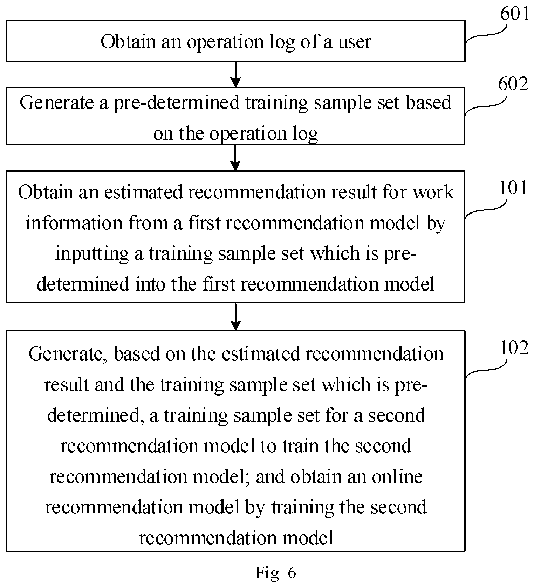

In one possible implementation, as shown in Fig. 6, before the above step 101 of inputting the predetermined training sample set into the first recommendation model, the electronic device may further generate the pre-determined training sample set. Steps are as follows.

Step 601, an operation log of the user is obtained.

The operation log includes location information of the current recommended multimedia sample work on the current recommended page, and location information of multimedia sample works, before and after the current recommended multimedia sample work in the operation log, on the current recommended page.

For example, for certain video application software, the user watched a video B before watching a video A and commented on the video B, and the user watches a video C after watching the video A and watches the video C for three seconds, so proximity information of the video A for the user is: watching the video B before watching the video A, commenting on the video B, watching the video C after watching the video A, and watching the video C for three seconds.

Step 602, the pre-determined training sample set is generated based on the operation log.

In the embodiment of the present disclosure, because the pre-determined training sample set includes the proximity information, the electronic device may enable model parameters of the second recommendation model to be more accurate based on the pre-determined training sample set.

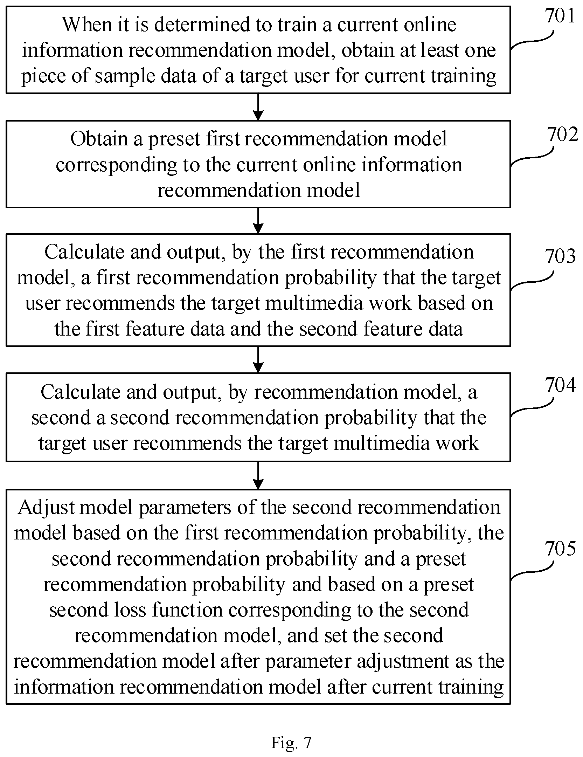

As shown in Fig. 7, Fig. 7 is an implementable example of the method for training the information recommendation model disclosed by the embodiment of the present disclosure in practical application. The example includes the following steps.

Step 701, when it is determined to train a current online information recommendation model, at least one piece of sample data of a target user for current training is obtained.

The proximity information refers to a sequence number of a current recommended video on a page. For example, if 20 quantities of videos are recommended to the user, the proximity information refers to sequence numbers of the 20 videos recommended to the user; and further, the proximity information may also include: IDs of three videos before and IDs of two videos after the current recommended video.

Each piece of sample data includes: one-time operation data of the target user on a target multimedia work, and context data (the proximity information) of the target user operating on the target multimedia work. The context data includes: multimedia works operated by the target user before and after performing a current operation, and operation sequence data.

Step 702, a preset first recommendation model corresponding to the current online information recommendation model is obtained.

Step 703, a first recommendation probability that the target user recommends the target multimedia work is calculated and output by the first recommendation model based on the first feature data and the second feature data.

The first feature data is: an operation sequence feature extracted from the context data of the sample data and representing the multimedia works operated before and after the current operation.

The second feature data is: an operation behavior feature extracted from the one-time operation data for the sample data and representing a current operation behavior.

Step 704, a second recommendation probability that the target user recommends the target multimedia work is calculated and output by the second recommendation model based on the second feature data.

The second recommendation model is a duplicate of the current online information recommendation model.

Step 705, the model parameters of the second recommendation model are adjusted based on the first recommendation probability, the second recommendation probability and a preset recommendation probability and based on a preset second loss function corresponding to the second recommendation model, and the second recommendation model after parameter adjustment is set as the information recommendation model after current training.

In the embodiment of the present disclosure, the electronic device trains the second recommendation model based on the first recommendation probability and the second recommendation probability output by the first recommendation model. In this way, the electronic device may influence the second recommendation model through the recommendation result carrying the proximity information when the second recommendation model is trained, so that after the trained second recommendation model is deployed online, it may more accurately recommend works to the user.

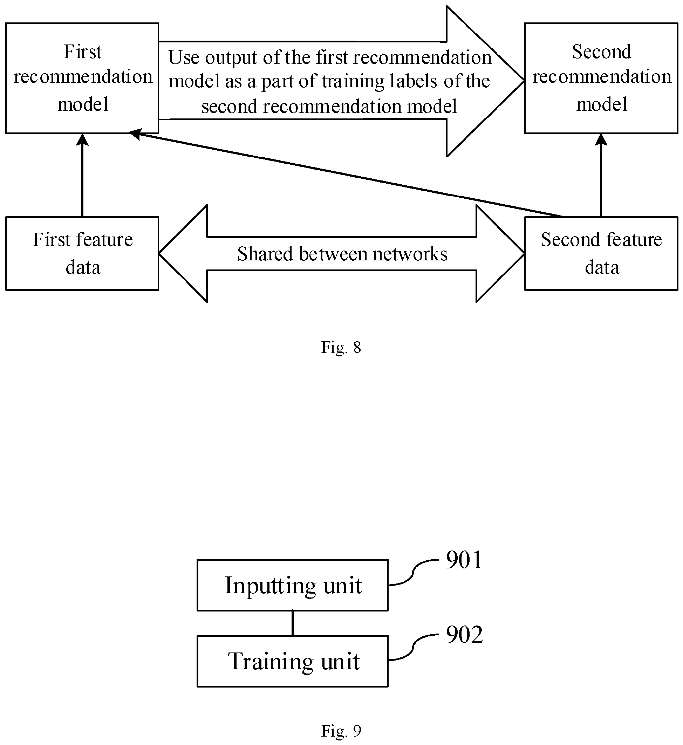

As shown in Fig. 8, Fig. 8 is a schematic flow chart of the method for training the information recommendation model provided by the embodiment of the present disclosure in combination with content shown in Fig. 7.

The first feature data and the second feature data are shared between a network of the first recommendation model and a network of the second recommendation model, i.e. a feature vector of a multimedia work in the first recommendation model and a feature vector of the same multimedia work in the second recommendation model are the same.

In addition, the electronic device may use output of the first recommendation model as a part of training labels of the second recommendation model to cause model network parameters of the second recommendation model to be influenced by the proximity information, so that after the trained second recommendation model is deployed online, it may more accurately recommend works to the user.

Based on the same technical concept, an embodiment of the present disclosure further provides an apparatus for training an information recommendation model. As shown in Fig. 9, the apparatus includes: an inputting unit 901 and a training unit 902.

The inputting unit 901 is configured to obtain an estimated recommendation result for work information from a first recommendation model by inputting a training sample set which is pre-determined into the first recommendation model. The training sample set at least includes proximity information of a multimedia sample work, and the proximity information of the multimedia sample work at least includes location information of a current recommended multimedia sample work on a current recommended page.

The training unit 902 is configured to generate, based on the estimated recommendation result and the pre-determined training sample set, a training sample set for a second recommendation model to train the second recommendation model, and obtain an online recommendation model by training the second recommendation model. The online recommendation model is configured to generate recommended parameters for works in a multimedia work library corresponding to a user in response to a recommendation request received from the user.

In one possible implementation, the training unit 902 is configured to: calculate a reference recommendation result based on the estimated recommendation result and a preset recommendation result, and generate the training sample set for the second recommendation model based on the reference recommendation result and the training sample set for the first recommendation model.

In one possible implementation, the training unit 902 is configured to: calculate the reference recommendation result by adopting the following formula: $L = a \times$

yl+ (1-a) × yt, wherein L is the reference recommendation result, yl is the preset recommendation result, yt is the estimated recommendation result, a is a preset adjustment constant, and 0<a<1.

In one possible implementation, the first recommendation model includes: a first feature extracting layer and a first feature calculating layer.

The second recommendation model includes: a second feature extracting layer and a second feature calculating layer.

The pre-determined training sample set further includes: operation data of the user on the current multimedia sample work.

The inputting unit 901 is configured to: obtain first feature data by inputting the proximity information into the first feature extracting layer; obtain second feature data by inputting operation data for the multimedia sample work and work information of the multimedia sample work into the second feature extracting layer; and obtain the estimated recommendation result calculated and output by the first feature calculating layer based on the first feature data and the second feature data by inputting the first feature data and the second feature data into the first feature calculating layer.

In one possible implementation, the training unit 902 is configured to: adjust network parameters of the second feature extracting layer and/or the second feature calculating layer based on a reference recommendation result and the second feature data and based on a preset second loss function corresponding to the second recommendation model, and set the second recommendation model with adjusted network parameters the online recommendation model.

In one possible implementation, the apparatus further includes: an adjusting unit.

The adjusting unit is configured to adjust model parameters of the first recommendation model based on the estimated recommendation result and a preset recommendation result and based on a preset first loss function corresponding to the first recommendation model, and set the first recommendation model with adjusted model parameters as a first recommendation model after current training.

In one possible implementation, the adjusting unit is configured to: adjust network parameters of the first feature extracting layer and/or the first feature calculating layer based on the estimated recommendation result and the preset recommendation result and based on the preset first loss function corresponding to the first recommendation model, and set the first recommendation model with adjusted network parameters as the first recommendation model after current training.

In one possible implementation, the apparatus further includes: an obtaining unit and a generating unit.

The obtaining unit is configured to obtain an operation log of the user, wherein the operation log includes the location information of the current recommended multimedia sample work on the current recommended page, and location information of multimedia sample works, before and after the current recommended multimedia sample work in the operation log, on the current recommended page.

The generating unit is configured to generate the pre-determined training sample set based on the operation log.

The embodiment of the present disclosure provides the apparatus for training the information recommendation model. The electronic device may input the pre-determined training sample set into the first recommendation model to obtain the estimated recommendation result for the work information from the first recommendation model, and generate the training sample set for the second recommendation model based on the estimated recommendation result and the pre-determined training sample set to train the second recommendation model so as to obtain the online recommendation model. Through the embodiment of the present disclosure, the electronic device may influence the second recommendation model through the estimated recommendation result carrying the proximity information when the second recommendation model is trained, so that the trained second recommendation model may more accurately recommend multimedia works to the user.

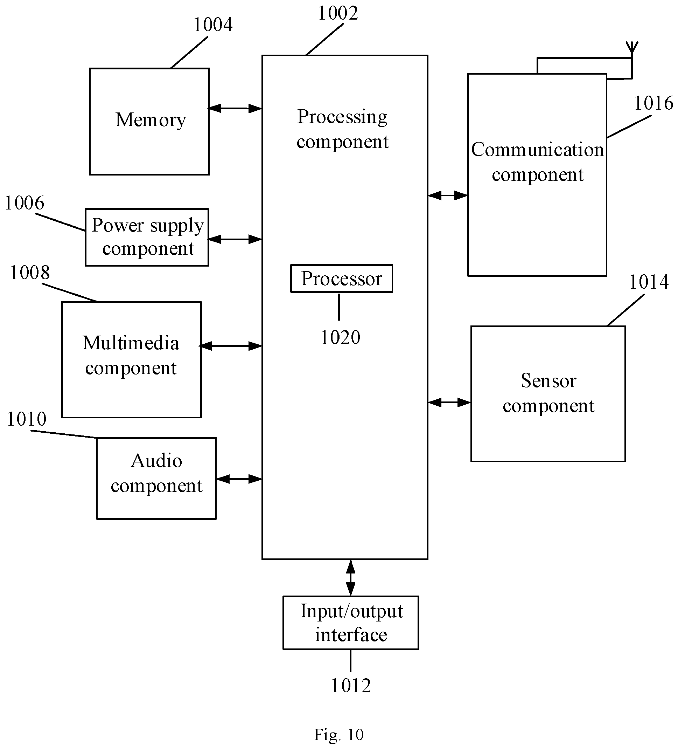

Fig. 10 is a block diagram of an electronic device illustrated according to an exemplary embodiment. For example, the electronic device may be a mobile phone, a computer, a digital broadcasting terminal, a messaging device, a game console, a tablet device, a medical device, a fitness device, a personal digital assistant, etc.

With reference to Fig. 10, the electronic device may include one or more of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls overall operations of the electronic device, such as operations associated with display, telephone calls, data communication, camera operations, and recording operations. The processing component 1002 may include one or a plurality of processors 1020 to execute instructions, so as to complete all or a part of steps of the abovementioned method. In addition, the processing component 1002 may include one or a plurality of modules to facilitate interaction between the processing component 1002 and other components. For example, the processing component 1002 may include a multimedia module to facilitate interaction between the multimedia component 1008 and the processing component 1002.

The memory 1004 is configured to store various types of data to support operations on the electronic device. Examples of these data include instructions for any application program or method operating on the electronic device, contact data, phone book data, messages, pictures, videos, etc. The memory 1004 may be implemented by any type of volatile or non-volatile storage devices or their combination, such as a static random access memory (SRAM), an electrically-erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 1006 provides power for various components of the electronic device. The power supply component 1008 may include a power management system, one or a plurality of power supplies, and other components associated with generation, management, and distribution of the power for the electronic device.

The multimedia component 1008 includes a screen that provides an output interface between the electronic device and a user. In some embodiments, the screen may include a liquid crystal display (LCD) and a touch panel (TP). If the screen includes the touch panel, the screen may be implemented as a touch screen to receive input signals from the user. The touch panel includes one or a plurality of touch sensors to sense touch, wipe, and gestures on the touch panel. The touch sensor may not only sense a boundary of a touch or wipe action, but also detect a duration and pressure related to a touch or wipe operation. In some embodiments, the multimedia component 1008 includes a front camera and/or a rear camera. When the electronic device is in an operation mode, such as a shooting mode or a video mode, the front camera and/or the rear camera may receive external multimedia data. Each of the front camera and the rear camera may be a fixed optical lens system or have a focal length and optical zoom capabili ti es.

The audio component 1010 is configured to output and/or input audio signals. For example, the audio component 1010 includes a microphone (MIC). When the electronic device is in the operation mode, such as a call mode, a recording mode, or a voice recognition mode, the microphone is configured to receive external audio signals. The received audio signals may be further stored in the memory 1004 or sent via the communication component 1016. In some embodiments, the audio component 1010 further includes a speaker for outputting audio signals.

The I/O interface 1012 provides an interface between the processing component 1002 and a peripheral interface module. The above peripheral interface module may be a keyboard, a click wheel, buttons, etc. These buttons may include but are not limited to: a home button, a volume button, a start button, and a lock button.

The sensor component 1014 includes one or a plurality of sensors to provide the electronic device with various aspects of status assessment. For example, the sensor component 1014 may detect an on/off status of the electronic device and relative positioning of a component. For example, the component is a display and a keypad of the electronic device. The sensor component 1014 may also detect a position change of the electronic device or a component of the electronic device, presence or absence of contact between the user and the electronic device, orientation or acceleration/deceleration of the electronic device, and a temperature change of the electronic device. The sensor component 1014 may include a proximity sensor configured to detect presence of a nearby object when there is no physical contact. The sensor component 1014 may also include a light sensor, such as a complementary metal-oxide semiconductor (CMOS) or charge coupled device (CCD) image sensor, for use in imaging applications. In some embodiments, the sensor component 1014 may also include an acceleration sensor, a gyroscope sensor, a magnetic sensor, a pressure sensor or a temperature sensor.

The communication component 1016 is configured to facilitate wired or wireless communication between the electronic device and other devices. The electronic device may access a wireless network based on a communication standard, such as wireless-fidelity (WiFi), an operator network (such as 2G, 3G, 4G, or 5G), or a combination thereof. In an exemplary embodiment, the communication component 1016 receives a broadcast signal or broadcast related information from an external broadcast management system via a broadcast channel. In an exemplary embodiment, the communication component 1016 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an exemplary embodiment, the electronic device may be implemented by one or more of an application specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic components, so as to execute the above method.

In an exemplary embodiment, a storage medium including instructions is further provided, for example, a memory 1004 including the instructions. The above instructions may be executed by a processor 1020 of an electronic device to complete the above method. Optionally, the storage medium may be a non-transitory computer-readable storage medium. For example, the non-transitory computer-readable storage medium may be a read-only memory (ROM), a random access memory (RAM), a compact disk read-only memory (CD-ROM), a magnetic tape, a floppy disk, an optical data storage device, etc.

It should be noted that the operation information of the user involved in the present application are all collected upon authorization of the user and are subjected to subsequent processing and analysis.

After considering the specification and practicing the invention disclosed herein, those of skill in the art will easily think of other implementation solutions of the present disclosure. The present application is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The specification and the embodiments are to be regarded as exemplary only, and the true scope and spirit of the present disclosure are pointed out by the appended claims.

It should be understood that the present disclosure is not limited to the precise structure that has been described above and shown in the drawings, and various modifications and changes can be made without departing from its scope. The scope of the present disclosure is only limited by the appended claims.

**Claims**

1. A method for training an information recommendation model, comprising:

   obtaining an estimated recommendation result for work information from a first recommendation model by inputting a training sample set which is pre-determined into the first recommendation model, wherein the training sample set at least comprises proximity information of a multimedia sample work, and the proximity information of the multimedia sample work at least comprises location information of a current recommended multimedia sample work on a current recommended page;
   generating, based on the estimated recommendation result and the training sample set which is pre-determined, a training sample set for a second recommendation model to train the second recommendation model; and
   obtaining an online recommendation model by training the second recommendation model, wherein the online recommendation model is configured to generate recommended parameters for works in a multimedia work library corresponding to a user in response to a recommendation request received from the user.

2. The method according to claim 1, wherein said generating, based on the estimated recommendation result and the training sample set which is pre-determined, the training sample set for the second recommendation model comprises:

   calculating a reference recommendation result based on the estimated recommendation result and a preset recommendation result; and
   generating the training sample set for the second recommendation model based on the reference recommendation result and the training sample set for the first recommendation model.

3. The method according to claim 2, wherein said calculating the reference recommendation result based on the estimated recommendation result and the preset recommendation result comprises:
   calculating the reference recommendation result by adopting the following formula:
   $L = a \times yl + (1-a) \times yt$, wherein L is the reference recommendation result, yl is the preset recommendation result, yt is the estimated recommendation result, a is a preset adjustment constant, and $0 < a < 1$.

4. The method according to claim 1, wherein:

   the first recommendation model comprises: a first feature extracting layer and a first feature calculating layer;
   the second recommendation model comprises: a second feature extracting layer and a second feature calculating layer;
   the training sample set which is pre-determined further comprises: operation data of the user on the multimedia sample work; and
   said obtaining the estimated recommendation result for the work information from the first recommendation model by inputting the training sample set which is pre-determined into the first recommendation model comprises:

   obtaining first feature data by inputting the proximity information into the first feature extracting layer;
   obtaining second feature data by inputting operation data for the multimedia sample work and work information of the multimedia sample work into the second feature extracting layer; and
   obtaining the estimated recommendation result calculated and output by the first feature calculating layer based on the first feature data and the second feature data by inputting the first feature data and the second feature data into the first feature calculating layer.

5. The method according to claim 4, wherein said generating, based on the estimated recommendation result and the training sample set which is pre-determined, the training sample set for the second recommendation model to train the second recommendation model, and said obtaining the online recommendation model by training the second recommendation model comprises:

adjusting network parameters of the second feature extracting layer and/or the second feature calculating layer based on a reference recommendation result and the second feature data and based on a preset second loss function corresponding to the second recommendation model; and

setting the second recommendation model with adjusted network parameters as the online recommendation model.

6. The method according to claim 4 or 5, wherein after said obtaining the estimated recommendation result for the work information from the first recommendation model by inputting the training sample set which is pre-determined into the first recommendation model, the method further comprises:

adjusting model parameters of the first recommendation model based on the estimated recommendation result and a preset recommendation result and based on a preset first loss function corresponding to the first recommendation model; and

setting the first recommendation model with adjusted model parameters as a first recommendation model after current training.

7. The method according to claim 6, wherein said adjusting the model parameters of the first recommendation model based on the estimated recommendation result and the preset recommendation result and based on the preset first loss function corresponding to the first recommendation model, and said setting the first recommendation model after with adjusted model parameters as the first recommendation model after current training comprises:

adjusting network parameters of the first feature extracting layer and/or the first feature calculating layer based on the estimated recommendation result and the preset recommendation result and based on the preset first loss function corresponding to the first recommendation model; and

setting the first recommendation model with adjusted network parameters as the first recommendation model after current training.

8. The method according to claim 1, wherein before inputting the training sample set which is pre-determined into the first recommendation model, the method further comprises:

obtaining an operation log of the user, wherein the operation log comprises the location information of the current recommended multimedia sample work on the current recommended page, and location information of multimedia sample works, before and after the current recommended multimedia sample work in the operation log, on the current recommended page; and

generating the training sample set which is pre-determined based on the operation log.

9. An apparatus for training an information recommendation model, comprising:

an inputting unit, configured to obtain an estimated recommendation result for work information from a first recommendation model by inputting a training sample set which is pre-determined into the first recommendation model, wherein the training sample set at least comprises proximity information of a multimedia sample work, and the proximity information of the multimedia sample work at least comprises location information of a current recommended multimedia sample work on a current recommended page; and

a training unit, configured to generate, based on the estimated recommendation result and the training sample set which is pre-determined, a training sample set for a second recommendation model to train the second recommendation model, and obtain an online recommendation model by training the second recommendation model, wherein the online recommendation model is configured to generate recommended parameters for works in a multimedia work library corresponding to a user in response to a recommendation request received from the user.

10. The apparatus according to claim 9, wherein the training unit is configured to:
calculate a reference recommendation result based on the estimated recommendation result and a preset recommendation result, and generate the training sample set for the second recommendation model based on the reference recommendation result and the training sample set for the first recommendation model.

11. The apparatus according to claim 10, wherein the training unit is configured to:
calculate the reference recommendation result by adopting the following formula:
$L = a \times yl + (1-a) \times yt$, wherein L is the reference recommendation result, yl is the preset recommendation result, yt is the estimated recommendation result, a is a preset adjustment constant, and $0 < a < 1$.

12. The apparatus according to claim 9, wherein:

the first recommendation model comprises: a first feature extracting layer and a first feature calculating layer;

the second recommendation model comprises: a second feature extracting layer and a second feature calculating layer;

the training sample set which is pre-determined further comprises: operation data of the user the multimedia sample work; and

the inputting unit is configured to:

obtain first feature data by inputting the proximity information into the first feature extracting layer;

obtain second feature data by inputting operation data for the multimedia sample work and work information of the multimedia sample work into the second feature extracting layer; and

obtain the estimated recommendation result calculated and output by the first feature calculating layer based on the first feature data and the second feature data by inputting the first feature data and the second feature data into the first feature calculating layer.

13. The apparatus according to claim 12, wherein the training unit is configured to:
adjust network parameters of the second feature extracting layer and/or the second feature calculating layer based on a reference recommendation result and the second feature data and based on a preset second loss function corresponding to the second recommendation model, and set the second recommendation model with adjusted network parameters as the online recommendation model.

14. The apparatus according to claim 12 or 13, further comprising: an adjusting unit, wherein:
the adjusting unit is configured to adjust model parameters of the first recommendation model based on the estimated recommendation result and a preset recommendation result and based on a preset first loss function corresponding to the first recommendation model, and set the first recommendation model with adjusted model parameters as a first recommendation model after current training.

15. The apparatus according to claim 14, wherein the adjusting unit is configured to:
adjust network parameters of the first feature extracting layer and/or the first feature calculating layer based on the estimated recommendation result and the preset recommendation result and based on the preset first loss function corresponding to the first recommendation model, and set the first recommendation model with adjusted network parameters as the first recommendation model after current training.

16. The apparatus according to claim 9, further comprising: an obtaining unit and a generating unit, wherein

the obtaining unit is configured to obtain an operation log of the user, wherein the operation log comprises the location information of the current recommended multimedia sample work on the current recommended page, and location information of multimedia sample works, before and after the current recommended multimedia sample work in the operation log, on the current recommended page; and

the generating unit is configured to generate the training sample set which is pre-determined based on the operation log.

17. An electronic device, comprising a processor, a communication interface, a memory and a communication bus, wherein the processor, the communication interface and the memory complete communication among them through the communication bus;

the memory is configured to store a computer program; and

the processor is configured to call the computer program stored on the memory to cause the electronic device to:

obtain an estimated recommendation result for work information from a first recommendation model by inputting a training sample set which is pre-determined into the first recommendation model, wherein the training sample set at least comprises proximity information of a multimedia sample work, and the proximity information of the multimedia sample work at least comprises location information of a current recommended multimedia sample work on a current recommended page;

generate, based on the estimated recommendation result and the training sample set which is pre-determined, a training sample set for a second recommendation model to train the second recommendation model; and

obtain an online recommendation model by training the second recommendation model, wherein the online recommendation model is configured to generate recommended parameters for works in a multimedia work library corresponding to a user in response to a recommendation request received from the user.

**18.** The electronic device according to claim 17, wherein the processor is configured to:

> calculate a reference recommendation result based on the estimated recommendation result and a preset recommendation result; and generate the training sample set for the second recommendation model based on the reference recommendation result and the training sample set for the first recommendation model.

**19.** The electronic device according to claim 18, wherein the processor is configured to :
calculate the reference recommendation result by adopting the following formula:
$L = a \times yl + (1-a) \times yt$, wherein L is the reference recommendation result, yl is the preset recommendation result, yt is the estimated recommendation result, a is a preset adjustment constant, and $0 < a < 1$.

**20.** The electronic device according to claim 17, wherein:

> the first recommendation model comprises: a first feature extracting layer and a first feature calculating layer;
> the second recommendation model comprises: a second feature extracting layer and a second feature calculating layer;
> the training sample set which is pre-determined further comprises: operation data of the user on the multimedia sample work; and
> the processor is configured to:
>
> > obtain first feature data by inputting the proximity information into the first feature extracting layer;
> > obtain second feature data by inputting operation data for the multimedia sample work and work information of the multimedia sample work into the second feature extracting layer; and
> > obtain the estimated recommendation result calculated and output by the first feature calculating layer based on the first feature data and the second feature data by inputting the first feature data and the second feature data into the first feature calculating layer.

**21.** The electronic device according to claim 20, wherein the processor is configured to:

> adjust network parameters of the second feature extracting layer and/or the second feature calculating layer based on a reference recommendation result and the second feature data and based on a preset second loss function corresponding to the second recommendation model;

> and
> set the second recommendation model with adjusted network parameters as the online recommendation model.

**22.** The electronic device according to claim 20 or 21, wherein the processor is further configured to:

> adjust, after obtaining the estimated recommendation result for the work information from the first recommendation model by inputting the training sample set which is pre-determined into the first recommendation model, model parameters of the first recommendation model based on the estimated recommendation result and a preset recommendation result and based on a preset first loss function corresponding to the first recommendation model; and
> set the first recommendation model with adjusted model parameters as a first recommendation model after current training.

**23.** The electronic device according to claim 22, wherein the processor is configured to:

> adjust network parameters of the first feature extracting layer and/or the first feature calculating layer based on the estimated recommendation result and the preset recommendation result and based on the preset first loss function corresponding to the first recommendation model; and
> set the first recommendation model with adjusted network parameters as the first recommendation model after current training.

**24.** The electronic device according to claim 17, wherein the processor is further configured to:

> obtain an operation log of the user, wherein the operation log comprises the location information of the current recommended multimedia sample work on the current recommended page, and location information of multimedia sample works, before and after the current recommended multimedia sample work in the operation log, on the current recommended page; and
> generate the training sample set which is pre-determined based on the operation log.

**25.** A computer readable storage medium, storing a computer program, wherein the computer program is executed by a processor of a computer to cause the computer to execute the method according to any one of claims 1-8.

Obtain an estimated recommendation result for work information from a first recommendation model by inputting a training sample set which is pre-determined into the first recommendation model

101

Generate, based on the estimated recommendation result and the training sample set which is pre-determined, a training sample set for a second recommendation model to train the second recommendation model; and obtain an online recommendation model by training the second recommendation model

102

Fig. 1

Obtain an estimated recommendation result for work information from a recommendation model by inputting a first training sample set which is pre-determined into the first recommendation model

101

Generate, based on the estimated recommendation result and the training sample set which is pre-determined, a training sample set for a second recommendation model to train the second recommendation model; and obtain an online recommendation model by training the second recommendation model

102

Calculate a reference recommendation result based on the estimated recommendation result and a preset recommendation result; and generate the training sample set for the second recommendation model based on the reference recommendation result and the training sample set for the first recommendation model

1021

Fig. 2

Obtain first feature data by inputting the proximity information into the first feature extracting layer
`1011`

Obtain second feature data by inputting operation data for the multimedia sample work and work information of the multimedia sample work into the second feature extracting layer
`1012`

Obtain the estimated recommendation result calculated and output by the first feature calculating layer based on the first feature data and the second feature data by inputting the first feature data and the second feature data into the first feature calculating layer
`1013`

Obtain an estimated recommendation result for work information from a first recommendation model by inputting a training sample set which is pre-determined into the first recommendation model
`101`

Generate, based on the estimated recommendation result and the training sample set which is pre-determined, a training sample set for a second recommendation model to train the second recommendation model; and obtain an online recommendation model by training the second recommendation model
`102`

Fig. 3

Obtain first feature data by inputting the proximity information into the first feature extracting layer

1011

Obtain second feature data by inputting operation data for the multimedia sample work and work information of the multimedia sample work into the second feature extracting layer

1012

Obtain the estimated recommendation result calculated and output by the first feature calculating layer based on the first feature data and the second feature data by inputting the first feature data and the second feature data into the first feature calculating layer

1013

Generate, based on the estimated recommendation result and the training sample set which is pre-determined, a training sample set for a second recommendation model to train the second recommendation model; and obtain an online recommendation model by training the second recommendation model

102

Adjust network parameters of the second feature extracting layer and/or the second feature calculating layer based on a reference recommendation result and the second feature data and based on a preset second loss function corresponding to the second recommendation model, and set the second recommendation model with adjusted network parameters as the online recommendation model

1022

Fig. 4

| Obtain first feature data by inputting the proximity information into the first feature extracting layer | 1011 |

| Obtain second feature data by inputting operation data for the multimedia sample work and work information of the multimedia sample work into the second feature extracting layer | 1012 |

| Obtain the estimated recommendation result calculated and output by the first feature calculating layer based on the first feature data and the second feature data by inputting the first feature data and the second feature data into the first feature calculating layer | 1013 |

101

Obtain first feature data by inputting the proximity information into the first feature extracting layer

Generate, based on the estimated recommendation result and the training sample set which is pre-determined, a training sample set for a second recommendation model to train the second recommendation model; and obtain an online recommendation model by training the second recommendation model

Adjust network parameters of the second feature extracting layer and/or the second feature calculating layer based on a reference recommendation result and the second feature data and based on a preset second loss function corresponding to the second recommendation model, and set the second recommendation model with adjusted network parameters as the online recommendation model

1022

102

501

Adjust model parameters of the first recommendation model based on the estimated recommendation result and a preset recommendation result and based on a preset first loss function corresponding to the first recommendation model, and set the first recommendation model with adjusted model parameters as a first recommendation model after current training

Fig. 5

EP 4 068 119 A1

Obtain an operation log of a user — 601

Generate a pre-determined training sample set based on the operation log — 602

Obtain an estimated recommendation result for work information from a first recommendation model by inputting a training sample set which is pre-determined into the first recommendation model — 101

Generate, based on the estimated recommendation result and the training sample set which is pre-determined, a training sample set for a second recommendation model to train the second recommendation model; and obtain an online recommendation model by training the second recommendation model — 102

Fig. 6

| When it is determined to train a current online information recommendation model, obtain at least one piece of sample data of a target user for current training | 701 |

↓

| Obtain a preset first recommendation model corresponding to the current online information recommendation model | 702 |

↓

| Calculate and output, by the first recommendation model, a first recommendation probability that the target user recommends the target multimedia work based on the first feature data and the second feature data | 703 |

↓

| Calculate and output, by recommendation model, a second a second recommendation probability that the target user recommends the target multimedia work | 704 |

↓

| Adjust model parameters of the second recommendation model based on the first recommendation probability, the second recommendation probability and a preset recommendation probability and based on a preset second loss function corresponding to the second recommendation model, and set the second recommendation model after parameter adjustment as the information recommendation model after current training | 705 |

Fig. 7

| First recommendation model | Use output of the first recommendation model as a part of training labels of the second recommendation model | Second recommendation model |
| First feature data | Shared between networks | Second feature data |

Fig. 8

Inputting unit — 901

Training unit — 902

Fig. 9

Fig. 10

# EP 4 068 119 A1

| | INTERNATIONAL SEARCH REPORT | International application No. |
|---|---|---|
| | | **PCT/CN2020/127541** |

**A. CLASSIFICATION OF SUBJECT MATTER**

G06F 16/9535(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI; EPODOC; CNKI; CNPAT: 推荐, 模型, 训练, 样本, 位置, 特征, 参数, recommend+, model, train, sample, position, feature, parameter

**C. DOCUMENTS CONSIDERED TO BE RELEVANT**

| Category* | Citation of document, with indication, where appropriate, of the relevant passages | Relevant to claim No. |
|---|---|---|
| X | CN 109992710 A (NETEASE MEDIA TECHNOLOGY (BEIJING) CO., LTD.) 09 July 2019 (2019-07-09)<br>description paragraphs [0003],[0057]-[0058],[0066]-[0080] | 1-3, 8-11, 16-19, 24-25 |
| X | CN 107423442 A (FLAMINGO NETWORK GUANGZHOU CO., LTD. et al.) 01 December 2017 (2017-12-01)<br>description, paragraphs [0051]-[0056] | 1-3, 8-11, 16-19, 24-25 |
| A | CN 106294456 A (HUAWEI TECHNOLOGIES CO., LTD.) 04 January 2017 (2017-01-04)<br>entire document | 1-25 |
| A | US 2010191680 A1 (SAMSUNG ELECTRONICS CO., LTD.) 29 July 2010 (2010-07-29)<br>entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 January 2021** | **10 February 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2020/127541**

| Patent document cited in search report | | | Publication date (day/month/year) | Patent family member(s) | | | Publication date (day/month/year) |
|---|---|---|---|---|---|---|---|
| CN | 109992710 | A | 09 July 2019 | None | | | |
| CN | 107423442 | A | 01 December 2017 | None | | | |
| CN | 106294456 | A | 04 January 2017 | None | | | |
| US | 2010191680 | A1 | 29 July 2010 | KR | 20100086676 | A | 02 August 2010 |

Form PCT/ISA/210 (patent family annex) (January 2015)

**EP 4 068 119 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911173202